# EUROPÄISCHE PATENTSCHRIFT

(11) **EP 1 473 484 B1**
(45) Veröffentlichungstag und Bekanntmachung des Hinweises auf die Patenterteilung: **13.02.2008**
(21) Anmeldenummer: 04009757.8
(22) Anmeldetag: 24.04.2004
(51) Int. Cl.: F16F 15/12, F16F 15/123

(54) **Torsionsschwingungsdämpfer**
Torsional vibration damper
Amortisseur de vibrations torsionelles

(30) Priorität: 30.04.2003 DE 10319355
(43) Veröffentlichungstag der Anmeldung: 03.11.2004
(73) Patentinhaber: ZF Sachs AG, 97424 Schweinfurt (DE)
(72) Erfinder: Ament, Norbert, 97714 Oerlenbach (DE)

(56) Entgegenhaltungen:
- DE-A- 3 542 491
- DE-A- 3 921 283
- DE-A- 4 309 477
- DE-A- 4 314 856
- DE-A- 19 626 019
- FR-A- 2 624 939
- FR-A- 2 725 256

## Beschreibung

Die vorliegende Erfindung betrifft einen Torsionsschwingungsdämpfer, umfassend einen ersten Dämpferbereich mit einem ersten Eingangsbereich und einem ersten Ausgangsbereich, welcher über eine erste Dämpferelementenanordnung zur Drehmomentübertragung mit dem ersten Eingangsbereich gekoppelt ist, einen zweiten Dämpferbereich mit einem zweiten Eingangsbereich, der mit dem ersten Ausgangsbereich des ersten Dämpferbereichs in Drehmomentübertragungsverbindung steht, und mit einem zweiten Ausgangsbereich, der über eine zweite Dämpferelementenanordnung zur Drehmomentübertragung mit dem zweiten Eingangsbereich gekoppelt ist und mit einem Abtriebselement in Drehmomentübertragungsverbindung steht, wobei eine Drehwinkelbegrenzungsanordnung vorgesehen ist, welche eine Relativdrehung zwischen dem ersten Ausgangsbereich des ersten Dämpferbereichs und dem Abtriebselement in einem vorbestimmten Winkelbereich um eine Drehachse zulässt.

Ein derartiger in einer Kupplungsscheibe vorgesehener Torsionsschwingungsdämpfer ist aus der DE 39 21 283 A1 bekannt. Dieser zweistufig aufgebaute Torsionsschwingungsdämpfer weist als Lastdämpferbereich einen ersten Dämpferbereich auf, der mit seinem ersten Eingangsbereich die Reibbeläge trägt und mit seinem ersten Ausgangsbereich bezüglich einer als Abtriebselement wirksamen Nabe in einem vorbestimmten Drehwinkelbereich drehbar ist. Hierzu sind am Außenumfang der Nabe einerseits und am Innenumfang des als Blechstanzteil scheibenartig ausgebildeten ersten Ausgangsbereichs jeweils Verzahnungen vorgesehen, die mit einem vorbestimmten Drehwinkel bezüglich einander verdrehbar sind und somit eine Drehwinkelbegrenzungsanordnung definieren. Der als Vordämpfer wirksame zweite Dämpferbereich weist einen Eingangsbereich auf, der mit dem scheibenartig ausgebildeten Ausgangsbereich des Hauptdämpfers drehfest gekoppelt ist. Der ebenfalls scheibenartig ausgebildete zweite Ausgangsbereich des Vordämpfers ist mit der Nabe, also dem Abtriebselement, beispielsweise im Bereich der dort vorgesehenen Verzahnung drehfest gekoppelt.

Ein Problem bei einem derartigen Torsionsschwingungsdämpfer besteht darin, dass im Wirkungsbereich des Hauptdämpfers das zu übertragende Drehmoment über die beiden angesprochenen Verzahnungen an dem Scheibenelement bzw. der Nabe zu übertragen ist. Allein der Aufbau des Scheibenelements mit seiner beschränkten axialen Dicke legt hier eine elementare Beschränkung auf, da aufgrund der beschränkten axialen Dicke hier auch eine entsprechende Beschränkung in der Verzahnungsdicke vorhanden ist, die dazu führt, dass durch eine entsprechende Mindestanzahl an Zähnen eine gewisse Kompensation vorgesehen werden muss. Diese vergleichsweise große Anzahl an Zähnen bedingt jedoch, dass der Drehwinkelbereich, in dem der Ausgangsbereich des Hauptdämpfers bezüglich der Nabe drehbar ist, beschränkt ist, was wieder den Wirkungsbereich des Vordämpfers beschränkt. Der Übergang zu dickeren scheibenartigen Ausgangsbereichen des Hauptdämpfers ist insofern schwierig, als diese scheibenartigen Bauteile im Allgemeinen stanztechnisch und aus Blechmaterial hergestellt werden und die auf diese Art und Weise durchgeführte Herstellung nur bis zu einer bestimmten Dicke des Blechmaterials mit vertretbarem Aufwand durchführbar ist.

Es ist das Ziel der vorliegenden Erfindung, einen gattungsgemäßen Torsionsschwingungsdämpfer derart weiterzubilden, dass bei vergrößertem Wirkungsbereich des zweiten Dämpferbereichs größere Drehmomente übertragbar sind.

Erfindungsgemäß wird diese Aufgabe gelöst durch einen Torsionsschwingungsdämpfer, umfassend einen ersten Dämpferbereich mit einem ersten durch zwei in axialem Abstand zueinander angeordnete und miteinander verbundene Deckscheibenelemente gebildeten Eingangsbereich und einem als Zentralscheibenelement ausgebildeten ersten Ausgangsbereich, welcher über eine erste Dämpferelementenanordnung zur Drehmomentübertragung mit dem ersten Eingangsbereich gekoppelt ist, einen zweiten Dämpferbereich mit einem zweiten Eingangsbereich, der mit dem ersten Ausgangsbereich des ersten Dämpferbereichs in Drehmomentübertragungsverbindung steht, und mit einem zweiten Ausgangsbereich, der über eine zweite Dämpferelementenanordnung zur Drehmomentübertragung mit dem zweiten Eingangsbereich gekoppelt ist und mit einem Abtriebselement in Drehmomentübertragungsverbindung steht, wobei eine Drehwinkelbegrenzungsanordnung vorgesehen ist, welche eine Relativdrehung zwischen dem ersten Ausgangsbereich des ersten Dämpferbereichs und dem Abtriebselement in einem vorbestimmten Winkelbereich um eine Drehachse zulässt.

Dabei ist dann weiter vorgesehen, dass die Drehwinkelbegrenzungsanordnung ein axial zwischen den zwei Deckscheibenelementen angeordnetes, jeweils eine an der Innenumfangsseite und an der Außenumfangsseite ausgebildete Verzahnung aufweisendes Zwischenelement zwischen dem ersten Ausgangsbereich des ersten Dämpferbereichs und dem Abtriebselement umfasst, welches Zwischenelement über die an der Außenumfangsseite ausgebildete Verzahnung mit dem als Zentralscheibenelement ausgebildeten ersten Ausgangsbereich im Wesentlichen drehfest über verbunden ist und dabei die an der Innenumfangsseite ausgebildete Verzahnung eine größere Axialerstreckung als die an der Außenumfangsseite ausgebildete Verzahnung aufweist und bezüglich des Abtriebselements in dem vorbestimmten Drehwinkelbereich verdrehbar ist.

Bei dem erfindungsgemäßen Torsionsschwingungsdämpfer ist also ein direkter und das übertragbare Drehmoment begrenzender Kontakt zwischen dem ersten Ausgangsbereich und dem Abtriebselement vermieden. Vielmehr ist dieser Kontakt in den Wechselwirkungsbereich zwischen dem Abtriebselement und dem Zwischenelement verlagert. Somit lässt sich einerseits die Kopplung zwischen dem ersten Ausgangsbereich und dem Zwischenelement und andererseits die Kopplung zwischen dem Zwischenelement und dem Abtriebselement optimieren, so dass größere Drehmomente übertragen werden können und überdies der vorbestimmte Drehwinkelbereich im Vergleich zum Stand der Technik deutlich vergrößert werden kann. Dies liegt vor allem daran, dass das Zwischenelement, das in anderer Art und Weise hergestellt werden kann, als der Ausgangsbereich, den vorangehend geschilderten fertigungstechnischen Beschränkungen nicht unterliegt und somit beispielsweise mit deutlich größerer axialer Erstreckung bereitgestellt werden kann, als dies im Falle des ersten Ausgangsbereichs bei vertretbarem Aufwand möglich ist. Somit kann insbesondere die axiale Wechselwirkungslänge der Drehwinkelbegrenzungsanordnung, die nunmehr zwischen dem Abtriebselement und dem Zwischenelement wirksam ist, vergrößert werden, wobei gleichzeitig aber auch der hier zugelassene Freiwinkel vergrößert werden kann. Dies hat zur Folge, dass der zweite Dämpferbereich in einem deutlich größeren Winkelbereich, nämlich dem vergrößerten vorbestimmten Drehwinkelbereich, wirksam sein kann.

Bei einer besonders vorteilhaften Ausgestaltungsform kann vorgesehen sein, dass die erste, am Innenumfangsbereich des Zwischenelements vorgesehene Verzahnungsformation mit einer ersten Gegen-Verzahnungsformation an einem Außenumfangsbereich des Abtriebselements mit dem vorbestimmten Drehwinkelbereich entsprechendem Drehbewegungsspiel in Kämmeingriff steht.

Um eine stabile Kopplung zwischen dem ersten Ausgangsbereich und dem Zwischenelement erlangen zu können, wird weiter vorgeschlagen, dass die zweite, am Außenumfangsbereich des Zwischenelements vorgesehene Verzahnungsformation mit einer zweiten Gegen-Verzahnungsformation am ersten Ausgangsbereich des ersten Dämpferbereichs im Wesentlichen ohne Drehbewegungsspiel in Kämmeingriff steht. Hier ist von Bedeutung, dass bei diesem Kämmeingriff nicht mehr auf das Bereitstellen eines bestimmten Freiwinkels geachtet werden muss, so dass auch bei vergleichsweise dünnem ersten Ausgangsbereich durch entsprechende Umfangserstreckung der daran gebildeten zweiten Gegen-Verzahnungsformation bzw. der Zähne derselben eine ausreichende Stabilität auch zur Übertragung größerer Drehmomente erlangt werden kann.

Um einen einfachen, gleichwohl jedoch stabilen Aufbau erlangen zu können, wird vorgeschlagen, dass das Zwischenelement ringartig ausgebildet ist.

Wie bereits vorangehend angesprochen, ist es ein elementarer Vorteil des erfindungsgemäßen Torsionsschwingungsdämpfers, dass das Zwischenelement nicht fertigungstechnischen Beschränkungen des ersten Ausgangsbereichs unterliegt, insbesondere wenn dieser als ein scheibenartiges Blechteil stanztechnisch herzustellen ist. Es wird daher weiter vorgeschlagen, dass eine Erstreckungslänge der ersten Verzahnungsformation in Richtung der Drehachse größer ist, als eine axiale Dicke des Zentralscheibenelements. Beispielsweise kann vorgesehen sein, dass die erste Verzahnungsformation und die erste Gegen-Verzahnungsformation im Wesentlichen die gleiche Axialerstreckungslänge aufweisen. Um eine definierte Positionierung des Zwischenelements bezüglich des ersten Ausgangsbereichs und somit insbesondere auch bezüglich des Abtriebselements vorgeben zu können, wird vorgeschlagen, dass an dem Zwischenelement wenigstens ein Axialanlagebereich zur axialen Abstützung an dem ersten Ausgangsbereich des ersten Dämpferbereichs vorgesehen ist.

Gemäß einem weiteren Aspekt betrifft die vorliegende Erfindung eine Kupplungsscheibe, umfassend einen erfindungsgemäßen Torsionsschwingungsdämpfer, wobei mit dem ersten Eingangsbereich des ersten Dämpferbereichs eine Reibflächenanordnung zur Drehmomentübertragung verbunden ist und wobei das Abtriebselement mit einer Abtriebswelle, beispielsweise Getriebeeingangswelle, zur gemeinsamen Drehung um die Drehachse verbindbar ist.

Die vorliegende Erfindung wird nachfolgend mit Bezug auf die beiliegenden Zeichnungen detailliert beschrieben. Es zeigt:
- Fig. 1: eine Teil-Längsschnittansicht eines in einer Kupplungsscheibe vorgesehenen erfindungsgemäßen Torsionsschwingungsdämpfers;
- Fig. 2: eine perspektivische Ansicht eines bei dem Torsionsschwingungsdämpfer der Fig. 1 eingesetzten ringartigen Zwischenelements;
- Fig. 3: das Zwischenelement der Fig. 2 in Axialansicht;
- Fig. 4: das Zwischenelement der Fig. 2 in Längsschnittansicht.

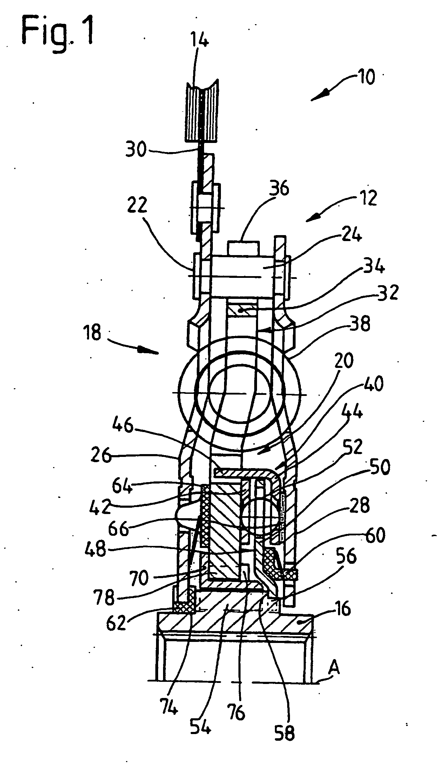

In Fig. 1 ist eine Kupplungsscheibe allgemein mit 10 bezeichnet. Diese Kupplungsscheibe 10 umfasst einen nachfolgend noch detaillierter beschriebenen Torsionsschwingungsdämpfer 12, durch welchen die Reibbeläge 14 dieser Kupplungsscheibe 10 über eine Abtriebsnabe 16 an eine nicht dargestellte Getriebeeingangswelle o.dgl. zur gemeinsamen Drehung mit dieser um eine Drehachse A angebunden werden können.

Der Torsionsschwingungsdämpfer 12 umfasst zwei allgemein mit 18 und 20 bezeichnete Dämpferbereiche. Der erste Dämpferbereich 18, welcher auch allgemein als Hauptdämpfer bezeichnet werden kann, umfasst als Eingangsbereich 22 zwei in axialem Abstand zueinander angeordnete und miteinander durch Nietelemente 24 o.dgl. fest verbundene, beispielsweise aus Blechmaterial hergestellte Deckscheibenelemente 26, 28. Mit dem Deckscheibenelement 26 sind über eine Belagfederung 30 o.dgl. die Reibbeläge 14 fest verbunden. Ein Ausgangsbereich 32 dieses ersten Dämpferbereichs 18 umfasst ein beispielsweise ebenfalls aus Blechmaterial stanztechnisch hergestelltes Zentralscheibenelemeht 34. Radial außen greift dieses mit Armabschnitten 36 zwischen die Nietbolzen 24 mit Drehbewegungsspiel ein, so dass ein maximaler Relativdrehwinkel für den Eingangsbereich 18 und den Ausgangsbereich 32 vorgegeben ist. Über eine Mehrzahl von Dämpferfedern 38, die in an sich bekannter Art und Weise in jeweiligen Federfenstern der Deckscheibenelemente 26, 28 bzw. des Zentralscheibenelements 34 angeordnet sind und sich daran umfangsmäßig abstützen, ist der Eingangsbereich 18 mit dem Ausgangsbereich 32 zur Drehmomentübertragung gekoppelt, so dass bedingt durch die Komprimierbarkeit der Dämpferfedern 38 und die zugelassene Relativdrehbarkeit des Eingangsbereichs 18 bezüglich des Ausgangsbereichs 32 bei Auftreten von Drehschwingungen eine Dämpfungsfunktion erfüllt werden kann.

Der zweite Dämpferbereich 20 umfasst als Eingangsbereich 40 zwei miteinander und auch mit dem Zentralscheibenelement 34 des ersten Dämpferbereichs 18 drehfest verbundene und beispielsweise aus Blechmaterial gefertigte Deckscheibenelemente 42, 44. Das Deckscheibenelement 44 kann dabei mehrere axial abgebogene Lappenbereiche 46 aufweisen, die in entsprechende Umfangsausnehmungen des Deckscheibenelements 42 und Öffnungen im Zentralscheibenelement 34 eingreifen und somit die im Wesentlichen drehfeste Kopplung zwischen dem Eingangsbereich 40 des zweiten Dämpferbereichs 20 und dem Ausgangsbereich 32 des ersten Dämpferbereichs 18 herstellen.

Der Ausgangsbereich 48 des zweiten Dämpferbereichs 20 umfasst ebenfalls ein Zentralscheibenelement 50, das zwischen den beiden Deckscheibenelementen 42, 44 angeordnet ist und mit diesen über eine Mehrzahl von Dämpferfedern 52 zur Drehmomentübertragung gekoppelt ist. Auch diese Dämpferfedern 52 stützen sich an jeweiligen Federfenstern in den Deckscheibenelementen 42, 44 bzw. dem Zentzralscheibenelement 50 ab und ermöglichen somit unter deren Umfangskompression eine Relativdrehung zwischen dem Eingangsbereich 40 und dem Ausgangsbereich 48 des zweiten Dämpferbereichs 20.

Der Ausgangsbereich 48 bzw. das Zentralscheibenelement 50 des zweiten Dämpferbereichs 20 ist mit der Nabe 16 im Bereich einer am Außenumfang derselben vorgesehenen Verzahnung 54 drehfest gekoppelt. Hierzu weist auch das Zentralscheibenelement 50 an seinem Innenumfangsbereich eine entsprechende Verzahnung 56 auf, die mit der Verzahnung 54 am Nabenelement 16 ohne Umfangsbewegungsspiel in Kämmeingriff steht. An einem stufenartigen Erweiterungsbereich 58 der Verzahnung 54 kann das Zentralscheibenelement 50 in einer Richtung axial abgestützt sein. Hierzu ist ein unter Federvorspannung stehendes Reibelement 60 bezüglich des Deckscheibenelements 28 des ersten Eingangsbereichs 22 einerseits und des Zentralscheibenelements 50 andererseits abgestützt. Die dadurch erzeugte Reaktionskraft wird über ein zwischen dem anderen Deckscheibenelement 26 des Eingangsbereichs 22 und der Verzahnung 54 der Nabe 16 wirkendes Lagerelement 62 aufgenommen. Somit ist neben einer definierten Positionierung des Zentralscheibenelements 50 bezüglich der Nabe 1 6 auch eine definierte Positionierung des Eingangsbereichs 22 des ersten Dämpferbereichs 18 bezüglich des Nabenelements 16 vorgegeben.

Ferner erkennt man ein Reibelement 64, das unter Federvorspannung bezüglich des Deckscheibenelements 26 einerseits und des Zentralscheibenelements 34 andererseits abgestützt ist. Auf diese Art und Weise wird das Zentralscheibenelement 24 gegen das Deckscheibenelement 42 des Eingangsbereichs 40 und damit das Deckscheibenelement 44 dieses Eingangsbereichs 40 unter Zwischenlagerung eines weiteren Reib- oder Abstützelements 66 gegen das Deckscheibenelement 28 gepresst. Neben der auf diese Art und Weise auch eingeführten Reibwirkung ist auch eine definierte Positionierung des Zentralscheibenelements 34 in axialer Richtung bezüglich der beiden Deckscheibenelemente 26, 28 und somit auch bezüglich der Nabe 16 vorgegeben.

Zwischen dem radial inneren Bereich des Zentralscheibenelements 34 des Ausgangsbereichs 32 und der Nabe 16 ist ein ringartig ausgestaltetes Zwischenelement 70 vorgesehen. Dieses ist, wie im Folgenden noch dargelegt, mit dem Zentralscheibenelement 34 drehfest gekoppelt, und ist mit der Nabe 16 derart gekoppelt, dass dieses Zwischenelement 70 in einem vorbestimmten Drehwinkelbereich bezüglich der Nabe 16 verdrehbar ist. Auf diese Art und Weise ist in Entsprechung zu diesem vorbestimmten Drehwinkelbereich auch der Wirkungswinkel für den zweiten Dämpferbereich 20 vorgegeben. Da nämlich das Zentralscheibenelement 50 desselben drehfest mit der Nabe 16 verbunden ist und darüber hinaus die Deckscheibenelemnte 42, 44 desselben mit dem Zentralscheibenelement 34 des ersten Dämpferbereichs 18 drehfest verbunden sind, kann eine Relativdrehung zwischen dem Eingangsbereich 40 und dem Ausgangsbereich 48 des zweiten Dämpferbereichs 20 dann nur in demjenigen Winkelbereich stattfinden, in welchem das Zentralscheibenelement 34 und somit das Zwischenelement 70 bezüglich der Nabe 16 verdrehbar sind. Hier ist also eine Drehwinkelbegrenzungsanordnung vorgesehen, welche den Winkelwirkungsbereich für den zweiten Dämpferbereich 40 vorgibt und diesen bei Erreichen des maximalen Wirkwinkels dann gegen weitere Kompression schützt und somit auch teilweise überbrückt.

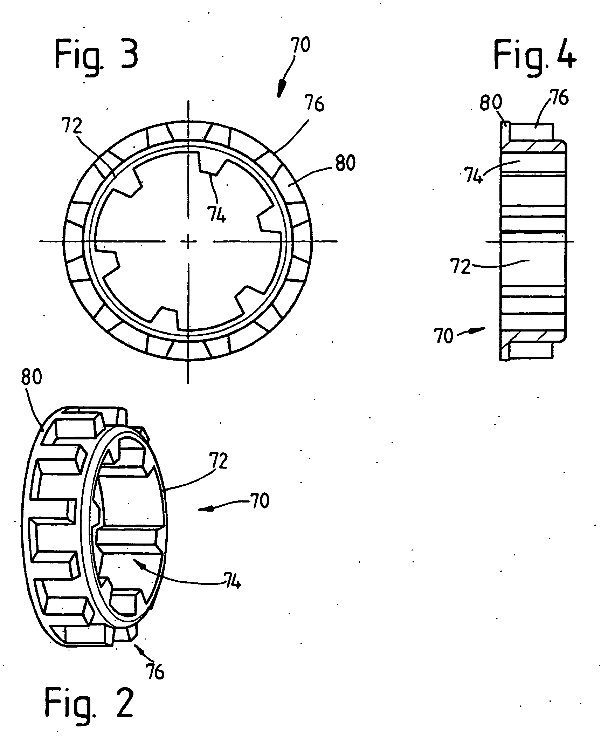

Der Aufbau des Zwischenelements 70 wird nachfolgend mit Bezug auf die Fig. 2 bis 4 detailliert beschrieben.

In diesen Figuren erkennt man das Zwischenelement 70, das einen ringartigen, im Wesentlichen zylindrischen Körperbereich 72 aufweist. An einer Innenumfangsseite dieses Körperbereichs 72 ist eine allgemein mit 74 bezeichnete Verzahnung vorgesehen, die im dargestellten Beispiel sechs Zähne aufweist, die mit der Verzahnung 54 der Nabe 16 so in Kämmeingriff stehen, dass dieses Zwischenelement 70 in einem vorbestimmten Drehwinkelbereich bezüglich der Nabe 16 um die Drehachse A drehbar ist. An der Außenumfangsseite des Körperbereichs 72 ist eine weitere Verzahnung 76 vorgesehen. Mit dieser Verzahnung 76 steht eine am Innenumfangsbereich des Zentralscheibenelements 34 vorgesehene Verzahnung 78 in Kämmeingriff. Die beiden Verzahnungen 76, 78 sind so aufeinander abgestimmt, dass zwischen dem Zwischenelement 70 und dem Zentralscheibenelement 34 kein Drehbewegungsspiel vorhanden ist. Vielmehr ist vorzugsweise vorgesehen, dass im Bereich dieser Verzahnungen 76, 78 ein fester, beispielsweise durch Verpressen bzw. Verstemmen herstellbarer Verbund zwischen dem Zwischenelement 70 und dem Zentralscheibenelement 34 erzeugt wird. Auf diese Art und Weise wird eine feste und definierte Halterung des Zwischenelements 70 am Zentralscheibenelement 34 erlangt. Hierzu ist zusätzlich an einem axialen Endbereich ein vorzugsweise ringartig umlaufender Bund 80 vorgesehen, der bei vollständig auf das Zentralscheibenelement 34 aufgeschobenem Zwischenelement 70 am Zentralscheibenelement 34 anliegt und somit eine definierte Axialpositionierung des Zwischenelements 70 bezüglich des Zentralscheibenelements 34 und somit auch bezüglich allen anderen Komponenten des Torsionsschwingungsdämpfers 12 vorgibt.

Man erkennt aus der vorangehenden Beschreibung, dass somit die Drehwinkelbegrenzungsfunktion für den zweiten Dämpferbereich 20 im Bereich der Verzahnungen 74, 54 realisiert ist. Dabei ist jedoch nunmehr selbst bei vergleichsweise geringer Anzahl an Zähnen der Verzahnung 74 und somit größerem möglichen Drehbewegungsspiel des Zwischenelements 70 bezüglich der Nabe 16 gleichwohl die Übertragung hoher Drehmomente möglich, da die Zähne der Verzahnung 74 eine deutlich größere Axialerstreckung aufweisen können, als die Zähne der Verzahnung 78 am Zentralscheibenelement 34. Somit ist die Flächenbelastung bei den einzelnen Zähnen der Verzahnung 74 auch bei geringerer Zähneanzahl deutlich geringer, so dass größere Drehmomente übertragen werden können. Im Bereich der Verzahnungen 76, 78 kann eine hohe Stabilität dadurch erlangt werden, dass hier kein Drehbewegungsspiel erforderlich ist, so dass eine größere Zähneanzahl eingesetzt werden kann, um auch bei der beschränkten axialen Wechselwirkungslänge, welche im Wesentlichen vorgegeben ist durch die Dicke des Zentralscheibenelements 34, eine große Gesamtdrehmomentübertragungsfläche über eine Vielzahl von Zähnen verteilt vorsehen zu können. Überdies wird es möglich, diejenigen Bauteile, die die Drehwinkelbegrenzungsfunktion erfüllen, also das Zwischenelement 70 und die Nabe 16 aus speziellen Materialien bzw. mit einer speziellen Vorgehensweise herzustellen, um dort zusätzlich die erforderliche Festigkeit sicherstellen zu können. So ist es beispielsweise möglich, diese beiden Teile 16, 70 kaltfließpresstechnisch herzustellen.

Durch die Möglichkeit, im Übergang zwischen dem Zentralscheibenelement 34, also dem Ausgangsbereich 32 des ersten Dämpferbereichs 18, und der Nabe 16 einen größeren Freiwinkel bereitstellen zu können, kann auch der Winkelbereich, in welchem der als Vordämpfer wirksame zweite Dämpferbereich 20 wirksam sein kann, vergrößert werden.

Überdies ermöglicht der Einsatz des erfindungsgemäß vorzusehenden Zwischenelements 70 die einfache Auslegung eines Torsionsschwingungsdämpfers auf verschiedene Anforderungen, vorgegeben durch einen erforderlichen Wirkwinkel des Vordämpfers, also des zweiten Dämpferbereichs 20. Ist ein kleinerer Dämpferwinkelbereich erforderlich, so kann ein hierfür ausgestaltetes Zwischenelement 70 mit entsprechend breiteren Zähnen 74 eingesetzt werden, bei ansonsten unverändert belassener Nabe 16 und entsprechend unverändert belassenem Zentralscheibenelement 34. Es können somit Torsionsschwingungsdämpfer erfindungsgemäßer Bauart im Wesentlichen modulartig bereitgestellt bzw. aufgebaut werden, so dass die gesamten Herstellungskosten und auch die Lagerhaltungskosten gesenkt werden können. Auch das Zentralscheibenelement 34 kann als baukastenfähiges Wechselteil bereitgestellt werden, wobei lediglich im Innenumfangsbereich auf die Anpassung an die Geometrie der Verzahnung 76 geachtet werden muss.

## Patentansprüche

1. Torsionsschwingungsdämpfer, umfassend:
- einen ersten Dämpferbereich (18) mit einem ersten durch zwei in axialem Abstand zueinander angeordnete und miteinander verbundene. Deckscheibenelemente (26, 28) gebildeten Eingangsbereich (22) und einem als Zentralscheibenelement (34) ausgebildeten ersten Ausgangsbereich (32), welcher über eine erste Dämpferelementenanordnung (38) zur Drehmomentübertragung mit dem ersten Eingangsbereich (22) gekoppelt ist,
- einen zweiten Dämpferbereich (20) mit einem zweiten Eingangsbereich (40), der mit dem ersten Ausgangsbereich (32) des ersten Dämpferbereichs (18) in Drehmomentübertragungsverbindung steht, und mit einem zweiten Ausgangsbereich (48), der über eine zweite Dämpferelementenanordnung (52) zur Drehmomentübertragung mit dem zweiten Eingangsbereich (40) gekoppelt ist und mit einem Abtriebselement (16) in Drehmomentübertragungsverbindung steht,
wobei eine Drehwinkelbegrenzungsanordnung (54, 70, 74) vorgesehen ist, welche eine Relativdrehung zwischen dem ersten Ausgangsbereich (32) des ersten Dämpferbereichs (18) und dem Abtriebselement (16) in einem vorbestimmten Winkelbereich um eine Drehachse (A) zulässt,
**dadurch gekennzeichnet, dass** die Drehwinkelbegrenzungsanordnung (54, 70, 74) ein axial zwischen den zwei Deckscheibenelementen (26, 28) angeordnetes, jeweils eine an der Innenumfangsseite und an der Außenumfangsseite ausgebildete. Verzahnung (74, 76) aufweisendes Zwischenelement (70) zwischen dem ersten Ausgangsbereich (32) des ersten Dämpferbereichs (18) und dem Abtriebselement (16) umfasst, welches Zwischenelement (70) über die an der Außenumfangsseite ausgebildete Verzahnung (76) mit dem als Zentralscheibenelement (34) ausgebildeten ersten Ausgangsbereich (32) im Wesentlichen drehfest verbunden ist und dabei die an der Innenumfangsseite ausgebildete Verzahnung (74) eine größere Axialerstreckung als die an der Außenumfangsseite ausgebildete Verzahnung (76) aufweist und bezüglich des Abtriebselements (16) in dem vorbestimmten Drehwinkelbereich verdrehbar ist.

2. Torsionsschwingungsdämpfer nach Anspruch 1,
**dadurch gekennzeichnet, dass** die erste, am Innenumfangsbereich des Zwischenelements (70) vorgesehene Verzahnungsformation (74) mit einer ersten Gegen-Verzahnungsformation (54) an einem Außenumfangsbereich des Abtriebselements (16) mit dem vorbestimmten Drehwinkelbereich entsprechendem Drehbewegungsspiel in Kämmeingriff steht.

3. Torsionsschwingungsdämpfer nach Anspruch 1 oder 2,
**dadurch gekennzeichnet, dass** die zweite, am Außenumfangsbereich des Zwischenelements (70) vorgesehene Verzahnungsformation (76) mit einer zweiten Gegen-Verzahnungsformation (78) am ersten Ausgangsbereich (32) des ersten Dämpferbereichs (18) im Wesentlichen ohne Drehbewegungsspiel in Kämmeingriff steht.

4. Torsionsschwingungsdämpfer nach einem der Ansprüche 1 bis 3,
**dadurch gekennzeichnet, dass** das Zwischenelement (70) ringartig ausgebildet ist.

5. Torsionsschwingungsdämpfer nach Anspruch 2 oder einem der Ansprüche 3 und 4, sofern auf Anspruch 2 rückbezogen,
**dadurch gekennzeichnet, dass** der eine Erstreckungslänge der ersten Verzahnungsformation (74) in Richtung der Drehachse (A) größer ist, als eine axiale Dicke des Zentralscheibenelements (34).

6. Torsionsschwingungsdämpfer nach Anspruch 5,
**dadurch gekennzeichnet, dass** die erste Verzahnungsformation (74) und die erste Gegen-Verzahnungsformation (54) im Wesentlichen die gleiche Axialerstreckungslänge aufweisen.

7. Torsionsschwingungsdämpfer nach einem der Ansprüche 1 bis 6,
**dadurch gekennzeichnet, dass** an dem Zwischenelement (70) wenigstens ein Axialanlagebereich (80) zur axialen Abstützung an dem ersten Ausgangsbereich (32) des ersten Dämpferbereichs (18) vorgesehen ist.

8. Kupplungsscheibe, umfassend einen Torsionsschwingungsdämpfer (12) nach einem der vorangehenden Ansprüche, wobei mit dem ersten Eingangsbereich (22) des ersten Dämpferbereichs (18) eine Reibflächenanordnung (14) zur Drehmomentübertragung verbunden ist und wobei das Abtriebselement (16) mit einer Abtriebswelle, beispielsweise Getriebeeingangswelle, zur gemeinsamen Drehung um die Drehachse (A) verbindbar ist.

## Claims

1. Torsional vibration damper, comprising:
- a first damper region (18) having a first inlet region (22) which is formed by two cover disc elements (26, 28) which are arranged at an axial spacing from one another and are connected to one another, and a first outlet region (32) which is configured as a central disc element (34) and is coupled to the first inlet region (22) via a first damper element arrangement (38) for torque transmission,
- a second damper region (20) having a second inlet region (40) which is connected in a torque-transmitting manner to the first outlet region (32) of the first damper region (18), and having a second outlet region (48) which is coupled to the second inlet region (40) via a second damper element arrangement (52) for torque transmission and is connected in a torque-transmitting manner to an output element (16),
a rotational-angle limiting arrangement (54, 70, 74) being provided which permits a relative rotation between the first outlet region (32) of the first damper region (18) and the output element (16) in a predefined angular range about a rotational axis (A),
**characterized in that** the rotational-angle limiting arrangement (54, 70, 74) comprises an intermediate element (70) between the first outlet region (32) of the first damper region (18) and the output element (16), which intermediate element (70) is arranged axially between the two cover disc elements (26, 28), has in each case one toothing system (74, 76) which is formed on the inner circumferential side and on the outer circumferential side, and is connected substantially fixedly in terms of rotation to the first outlet region (32) which is configured as a central disc element (34) via the toothing system (76) which is formed on the outer circumferential side, and the toothing system (74) which is formed on the inner circumferential side has a greater axial extent here than the toothing system (76), which is formed on the outer circumferential side, and can be rotated in the predefined rotational angular range with regard to the output element (16).

2. Torsional vibration damper according to Claim 1, **characterized in that** the first toothing formation (74) which is provided on the inner circumferential region of the intermediate element (70) is in meshing engagement with a first corresponding toothing formation (54) on an outer circumferential region of the output element (16), with a rotational movement play which corresponds to the predefined rotational angular range.

3. Torsional vibration damper according to Claim 1 or 2, **characterized in that** the second toothing formation (76) which is provided on the outer circumferential region of the intermediate element (70) is in meshing engagement with a second corresponding toothing formation (78) on the first output region (32) of the first damper region (18), substantially without rotational movement play.

4. Torsional vibration damper according to one of Claims 1 to 3, **characterized in that** the intermediate element (70) is of annular configuration.

5. Torsional vibration damper according to Claim 2 or either of Claims 3 and 4, if they refer back to Claim 2, **characterized in that** an extent of the first toothing formation (74) in the direction of the rotational axis (A) is greater than an axial thickness of the central disc element (34).

6. Torsional vibration damper according to Claim 5, **characterized in that** the first toothing formation (74) and the first corresponding toothing formation (54) have substantially the same axial extent.

7. Torsional vibration damper according to one of Claims 1 to 6, **characterized in that** at least one axial bearing region (80) is provided on the intermediate element (70) for axial support on the first outlet region (32) of the first damper region (18).

8. Clutch plate, comprising a torsional vibration damper (12) according to one of the preceding claims, a friction-face arrangement (14) for torque transmission being connected to the first inlet region (22) of the first damper region (18), and it being possible for the output element (16) to be connected to an output shaft, for example a transmission input shaft, for common rotation about the rotational axis (A).

## Revendications

1. Amortisseur de vibrations torsionnelles, comprenant:
- une première zone d'amortisseur (18) avec une première zone d'entrée (22) formée par deux éléments de plaque de couverture (26, 28) disposés avec un écart axial l'un par rapport à l'autre et reliés ensemble et avec une première zone de sortie (32) conçue en tant qu'élément central de plaque de couverture (34), qui par l'intermédiaire d'un premier agencement d'éléments amortisseurs (38) est couplée à la première zone d'entrée (22) pour la transmission du couple de rotation,
- une deuxième zone d'amortisseur (20) avec une deuxième zone d'entrée (40), qui est en liaison par transmission de couple de rotation avec la première zone de sortie (32) de la première zone d'amortisseur (18) et avec une deuxième zone de sortie (48), qui par l'intermédiaire d'un deuxième agencement d'éléments amortisseurs (52) est couplée avec la deuxième zone d'entrée (40) pour la transmission du couple de rotation, et qui est en liaison par transmission de couple de rotation avec un élément de réduction (16),
un dispositif de limitation de l'angle de rotation (54, 70, 74) étant prévu, qui admet une rotation relative entre la première zone de sortie (32) de la première zone d'amortisseur (18) et l'élément de réduction (16), dans une plage angulaire prédéfinie, autour d'un axe de rotation (A),
**caractérisé en ce que** le dispositif de limitation de l'angle de rotation (54, 70, 74) comprend un élément intercalaire (70), entre la première zone de sortie (32) de la première zone d'amortisseur (18) et l'élément de réduction (16), disposé en direction axiale entre les deux éléments de plaque de couverture (26, 28) et comportant à chaque fois une denture (74, 76) conçue sur la face périphérique intérieure et sur la face périphérique extérieure, lequel élément intercalaire (70) est relié de façon sensiblement solidaire en rotation, par l'intermédiaire de la denture (76) conçue sur la face périphérique extérieure avec la première zone de sortie (32) conçue en tant qu'élément central de plaque de couverture (34) et **en ce qu'**à cet effet, la denture (74) conçue sur la face périphérique intérieure présente une extension axiale supérieure à celle de la denture (76) conçue sur la face périphérique extérieure et est rotative dans la plage d'angle de rotation prédéfinie, par rapport à l'élément de réduction (16).

2. Amortisseur de vibrations torsionnelles selon la revendication 1,
**caractérisé en ce que** la formation dentée (74) prévue sur la zone périphérique intérieure de l'élément intercalaire (70) est en engagement par engrènement avec une première contre-formation dentée (54) sur une zone périphérique extérieure de l'élément de réduction (16), avec le jeu de mouvement rotatoire correspondant à la plage d'angle de rotation prédéfinie.

3. Amortisseur de vibrations torsionnelles selon la revendication 1 ou 2,
**caractérisé en ce que** la deuxième formation dentée (76) prévue sur la zone périphérique extérieure de l'élément intercalaire (70) est en engagement par engrènement, sensiblement sans jeu de mouvement rotatoire avec une deuxième contre-formation dentée (78) sur la première zone de sortie (32) de la première zone d'amortisseur (18) .

4. Amortisseur de vibrations torsionnelles selon l'une quelconque des revendications 1 à 3,
**caractérisé en ce que** l'élément intercalaire (70) est conçu sous forme annulaire.

5. Amortisseur de vibrations torsionnelles selon la revendication 2 ou selon l'une quelconque des revendications 3 et 4, dans la mesure où elles se réfèrent à la revendication 2,
**caractérisé en ce qu'**une longueur d'extension de la première formation dentée (74) est supérieure en direction de l'axe de rotation (A) à une épaisseur axiale de l'élément central de plaque de couverture (34).

6. Amortisseur de vibrations torsionnelles selon la revendication 5,
**caractérisé en ce que** la première formation dentée (74) et la première contre-formation dentée (54) présentent sensiblement la même longueur d'extension axiale.

7. Amortisseur de vibrations torsionnelles selon l'une quelconque des revendications 1 à 6,
**caractérisé en ce que** sur l'élément intercalaire (70), il est prévu au moins une zone d'appui axial (80) pour l'appui axial sur la première zone de sortie (32) de la première zone d'amortisseur (18) .

8. Disque d'embrayage, comprenant un amortisseur de vibrations torsionnelles (12) selon l'une quelconque des revendications précédentes, un agencement de surfaces de frottement (14) étant relié pour la transmission du couple de rotation avec la première zone d'entrée (22) de la première zone d'amortisseur (18) et l'élément de réduction (16) étant susceptible d'être relié avec un arbre de sortie, par exemple un arbre de transmission d'entrée, pour la rotation commune autour de l'axe de rotation (A).
